# EUROPEAN PATENT APPLICATION

(11) **EP 1 294 048 A2**
(43) Date of publication of application: **19.03.2003**
(21) Application number: 02006892.0
(22) Date of filing: 26.03.2002
(51) Int. Cl.: H01Q 5/00, H01Q 1/24, H01Q 1/22

(54) **Information device incorporating an integrated antenna for wireless communication**

(30) Priority: 13.09.2001 JP 2001278282
(71) Applicant: Kabushiki Kaisha Toshiba, Minato-ku, Tokyo 105 (JP)
(72) Inventor: Masaki, Toshiyuki, Intellectual Property Division, Minato-ku Tokyo 105-8001 (JP)
(74) Representative: Henkel, Feiler, Hänzel

(57) **Abstract**

In this invention, a diversity antenna (22) and dual-band antenna (42) are attached to the display portion of the portable information device. The dual-band antenna is connected to a Bluetooth circuit and wireless LAN 802.11a reception circuit. The diversity antenna is connected to a wireless LAN 802.11a transmission circuit. The Bluetooth circuit is not influenced by the wireless LAN 802.11a transmission system circuit. This invention can provide a compact portable information device.

## Description

The present invention relates to an information device which incorporates a wireless communication antenna and, more particularly, to a notebook type personal computer which incorporates a wireless communication antenna.

Notebook type personal computers which incorporate wireless communication antennas have conventionally been developed. For example, a notebook type personal computer disclosed in Jpn. Pat. Appln. KOKAI Publication No. 8-78931 implements a compact, antenna built-in notebook type personal computer by attaching two slot antennas to the back surface of its liquid crystal display. In this prior art, the two slot antennas adopt a wireless LAN diversity method.

The technique disclosed in Jpn. Pat. Appln. KOKAI Publication No. 8-78931 achieves downsizing by using a dielectric case. The antennas are mounted on the back surface of the housing of the liquid crystal display due to a large antenna area. This means that radiation is strong on the back surface of the housing of the liquid crystal display, but weak on its front surface.

In recent years, a short-distance wireless communication method "Bluetooth" has newly been developed. To employ a plurality of wireless communication schemes in the future, many antennas must be mounted.

Conceivable examples are a combination of a wireless LAN 802.11b and Bluetooth which use the same 2.4-GHz band, and a combination of a 5-GHz band wireless LAN 802.11a and Bluetooth in the future.

Conventionally available notebook type personal computers having a wireless communication function incorporate only a single wireless LAN communication function or single PHS communication function.

If antennas coping with a plurality of wireless communication functions are mounted on a conventional notebook type personal computer, they cause interference between themselves or reduce the diversity antenna effect.

The present invention has been made in consideration of the above situation, and has as its object to provide a device capable of communication by a plurality of wireless communication schemes.

To achieve the above objects, according to a first aspect of the invention, there is provided an information device comprising a body, a diversity antenna which is attached to the body and performs wireless communication in a first frequency band, and a dual-band antenna which is attached to the body and performs wireless communication in the first frequency band and a second frequency band.

According to the present invention, the use of the dual-band antenna eliminates the need for the use of three antennas in an information device which performs wireless communication by two wireless communication schemes including a diversity wireless communication scheme. This can implement a compact information device.

According to a second aspect of the invention, there is provided an information device comprising a diversity antenna which performs wireless communication in a first frequency band, a dual-band antenna which performs wireless communication in the first frequency band and a second frequency band, a transmission circuit which outputs a transmission signal transmitted in the first frequency band from the diversity antenna, a reception circuit which receives a reception signal in the first frequency band that is received by the diversity antenna, a communication circuit which performs wireless communication in the second frequency band by using the dual-band antenna, a switch which is connected between the diversity antenna and the transmission and reception circuits, connects the transmission circuit to the diversity antenna when a signal is output from the transmission circuit, and connects the reception circuit to the diversity antenna when a signal is received by the reception circuit, a first filter which is connected to the dual-band antenna and passes a signal in the first frequency band, a second filter which is connected between the dual-band antenna and the communication circuit and passes a signal in the second frequency band, and a diversity switch which compares reception power of a signal that has been received by the dual-band antenna and have passed through the first filter with reception power of a signal which has been received by the diversity antenna and has passed through the switch, and outputs a larger-power signal to the reception circuit.

According to the present invention, the dual-band antenna is used for reception of wireless communication in the first frequency band and for transmission and reception in the second frequency band. Even high transmission power in the first frequency band hardly influences wireless communication in the second frequency band.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing the RF circuit of a notebook type personal computer according to an embodiment of the present invention;
FIG. 2 is a view showing the structure of the antenna board of a dual-band antenna mounted on the notebook type personal computer according to the embodiment of the present invention;
FIG. 3 is a circuit diagram showing the equivalent circuit of an LPF;
FIG. 4 is a perspective view showing the antenna board shown in FIG. 2 that is attached to the back surface of the liquid crystal panel of the notebook type personal computer;
FIG. 5 is a sectional view showing a display portion where the antenna board shown in FIG. 4 is mounted;
FIG. 6 is a view for explaining the mounting position of a wireless LAN 802.11a dedicated antenna and that of a dual-band antenna common to the wireless LAN 802.11a and Bluetooth; and
FIG. 7 is a block diagram showing the hardware arrangement of the notebook type personal computer according to the embodiment of the present invention.

A notebook type personal computer which incorporates a wireless communication antenna according to an embodiment of the present invention will be described below with reference to the several views of the accompanying drawing.

This embodiment will explain a notebook type personal computer which incorporates a dual-band antenna capable of transmission/reception in two bands, i.e., the 5-GHz band of a wireless LAN 802.11a and the 2.4-GHz band of Bluetooth, and a diversity antenna capable of transmission/reception in the 5-GHz band.

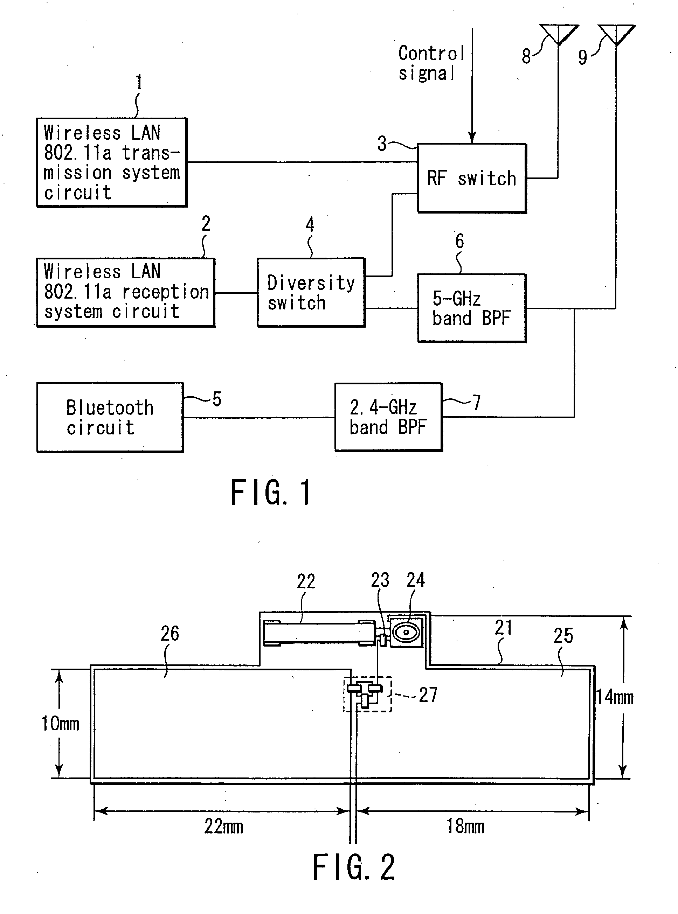

FIG. 1 is a block diagram showing the RF (Radio Frequency) circuit of the notebook type personal computer according to the embodiment of the present invention.

As shown in FIG. 1, the RF circuit of the notebook type personal computer according to the embodiment comprises a wireless LAN 802.11a transmission system circuit 1, a wireless LAN 802.11a reception system circuit 2, an RF switch 3, a diversity switch 4, a Bluetooth circuit 5, a 5-GHz band BPF 6, a 2.4-GHz band BPF 7, an antenna 8 dedicated to the wireless LAN 802.11a, and a dual-band antenna 9 common to the wireless LAN 802.11a and Bluetooth.

The wireless LAN 802.11a transmission system circuit 1 outputs a 5-GHz band transmission signal. The wireless LAN 802.11a reception system circuit 2 receives a 5-GHz band reception signal.

The RF switch 3 switches between the wireless LAN 802.11a transmission system circuit 1 and the wireless LAN 802.11a reception system circuit 2 on the basis of a control signal from the system. More specifically, the RF switch 3 connects the wireless LAN 802.11a transmission system circuit 1 to the wireless LAN 802.11a dedicated antenna 8 to transmit a signal by the wireless LAN 802.11a scheme; it connects the wireless LAN 802.11a dedicated antenna 8 to the wireless LAN 802.11a reception system circuit 2 to receive a signal by that scheme.

The diversity switch 4 compares the reception power of a signal input from the wireless LAN 802.11a dedicated antenna 8 via the RF switch 3 with that of a signal input from the dual-band antenna 9 via the 5-GHz BPF 6. Then, the diversity switch 4 outputs a signal having a larger reception power to the wireless LAN 802.11a reception system circuit 2.

The wireless LAN 802.11a dedicated antenna 8 and dual-band antenna 9 constitute a diversity antenna.

The 5-GHz band BPF 6 separates a 5-GHz band signal used in the wireless LAN 802.11a from an output from the dual-band antenna 9. The 5-GHz band BPF 6 outputs the separated 5-GHz band signal to the diversity switch 4.

The 2.4-GHz band BPF 7 separates a 2.4-GHz band signal used in Bluetooth from an output from the dual-band antenna 9. The 2.4-GHz band BPF 7 outputs the separated 2.4-GHz band signal to the Bluetooth circuit 5.

The notebook type personal computer according to the embodiment can realize a compact device and cost reduction because a diversity antenna can be constructed not by three antennas but by two antennas in a notebook type personal computer using two wireless communication schemes including a diversity wireless communication scheme.

A signal which adversely affects a Bluetooth wireless circuit in the common dual-band antenna 9 for only reception in the wireless LAN 802.11a and both transmission and reception in Bluetooth is only a reception signal in the low-power-level wireless LAN 802.11a. Hence, the influence a reception signal in the low-power-level wireless LAN 802.11a has on the Bluetooth wireless circuit can be reduced.

To the contrary, a high-power-level signal around +20 dBm is processed in an arrangement in which the Bluetooth wireless circuit shares an antenna with the wireless LAN 802.11a transmission system circuit. This increases the interference or spurious influence.

FIG. 2 is a view showing the structure of the antenna board of the dual-band antenna mounted on the notebook type personal computer according to the embodiment of the present invention.

As shown in FIG. 2, the antenna board of the dual-band antenna comprises on a single-side glass epoxy board 21 a dual-band antenna 22, a matching inductor 23, and a coaxial connector 24 for connecting a main body module.

The ground shape of the single-side glass epoxy board 21 is divided into two. A first divided ground pattern 25 has a peripheral length corresponding to 0.75 to 1.25 wavelengths in a frequency band of 5.15 to 5.35 GHz in order to ensure a stable band in a high frequency band, i.e., the 5-GHz band of the wireless LAN 802.11a.

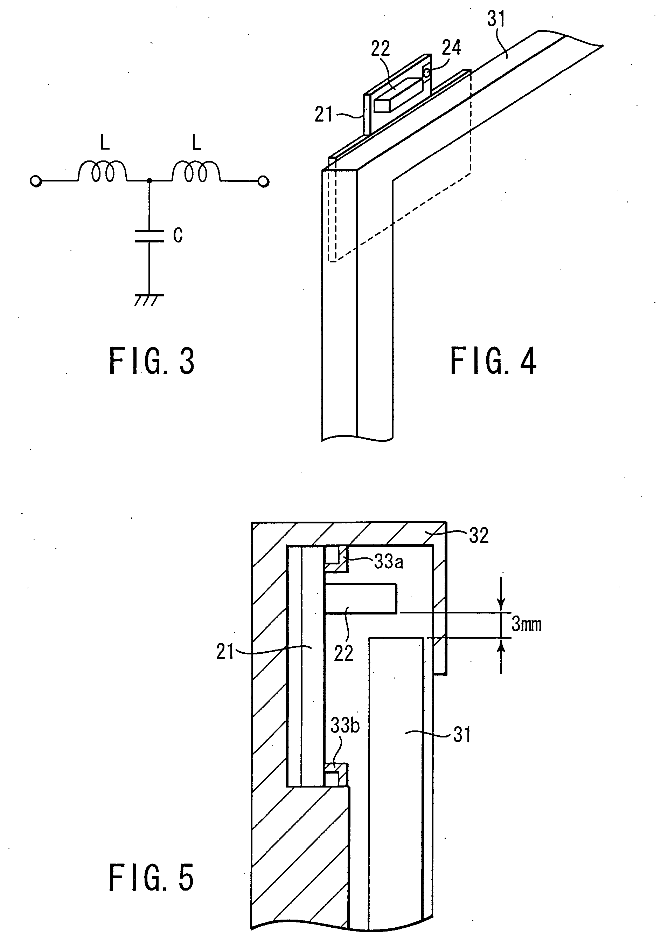

To ensure a stable band even in the 2.4-GHz band, the first divided ground pattern 25 and a second ground pattern 26 are connected via an LPF (Low Pass Filter) 27 like an equivalent circuit in FIG. 3. The LPF 27 transmits a 2.4-GHz band signal and cuts off a 5-GHz band signal.

The two ground patterns are connected at a high frequency in the 2.4-GHz band, and the entire ground pattern resonates in the 2.4-GHz band. For this purpose, the total peripheral length of the ground pattern is adjusted to 0.75 to 1.25 wavelengths in the 2.4-GHz band.

As shown in FIG. 2, the total peripheral length of the first ground pattern 25 is 64 mm, which corresponds to about 1.11 wavelengths in the frequency band of the wireless LAN 802.11a. The total peripheral length of the first and second ground patterns is 128 mm, which corresponds to about 1.04 wavelengths in the frequency band of Bluetooth.

This board structure realizes good antenna input impedance matching in both the 5-GHz band of the wireless LAN 802.11a and the 2.4-GHz band of Bluetooth, and can obtain stable antenna transmission/reception performance.

The two ground patterns are connected by the LPF 27 in the description of the antenna board, but may be connected by an inductor. The antenna board shown in FIG. 2 has an inductor value of about 1 [nH].

FIG. 4 is a perspective view showing the antenna board shown in FIG. 2 that is attached to the back surface of the liquid crystal panel of the notebook type personal computer. FIG. 5 is a sectional view showing a display portion where the antenna board shown in FIG. 4 is mounted. The same reference numerals as in FIG. 2 denote the same parts.

A method of attaching the antenna board of the dual-band antenna has been described. The antenna board of the wireless LAN antenna can also be attached to the liquid crystal panel by the same method as that of the antenna board of the dual-band antenna.

As shown in FIGS. 4 and 5, the antenna board 21 is mounted on the back surface of a liquid crystal panel 31 such that a chip antenna 22 attached to the antenna board 21 is positioned above the liquid crystal panel 31. The interval between the upper end of the liquid crystal panel 31 and the chip antenna 22 is 3 [mm].

This layout of the chip antenna 22 can prevent the difference in radiation characteristic between the front and back surfaces. The display portion including the liquid crystal panel can be made thin.

The antenna board 21 is fixed to a housing 32 by fixing portions 33a and 33b formed in the housing 32 of the display portion of the portable information device. Note that the antenna board is fixed by the fixing portions formed in the housing in this embodiment, but the method of fixing the antenna board to the housing is not limited to this. The antenna board suffices to be fixed to the housing such that the chip antenna attached to the antenna board is positioned above the liquid crystal panel.

By attaching the antenna board to the liquid crystal panel, a low housing profile can be maintained. An omnidirectional radiation characteristic can be attained without any difference between the liquid crystal display surface and the back surface. Since the antenna can be set at a high position, a transmission/reception environment almost free from the influence of the surrounding environment can be obtained.

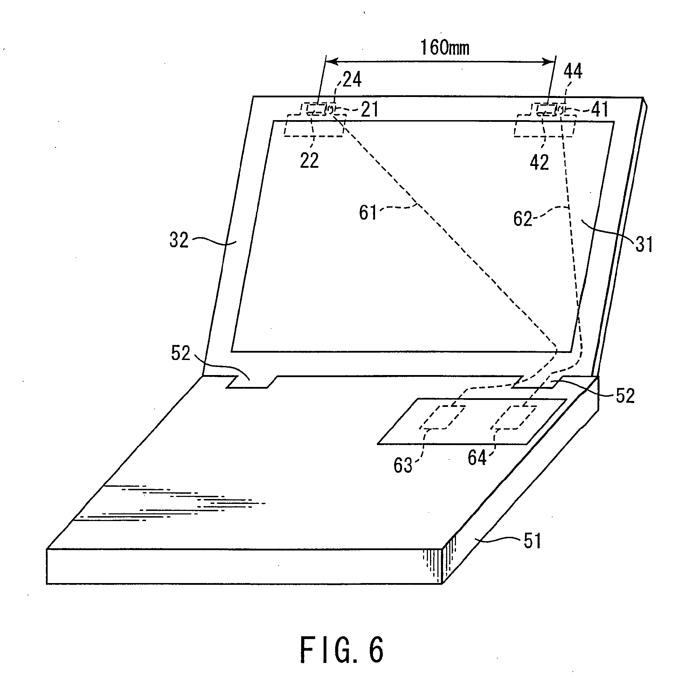

FIG. 6 is a view for explaining the mounting position of the wireless LAN 802.11a dedicated antenna and that of the dual-band antenna common to the wireless LAN 802.11a and Bluetooth. The same reference numerals as in FIGS. 2 and 4 denote the same parts.

As shown in FIG. 6, the antenna board 21 of the common dual-band antenna and an antenna board 41 of the wireless LAN 802.11a dedicated antenna are attached to the housing 32 on the back surface of the liquid crystal panel 31 of the display portion pivotally attached to a main body 51 of the notebook type personal computer via hinges 52. Similar to the antenna board shown in FIG. 2, the antenna board 41 of the wireless LAN 802.11a dedicated antenna comprises a chip antenna 42 and coaxial connector 44.

The distance between the wireless LAN antenna 42 and the dual-band antenna 22 that are attached above the liquid crystal display 31 must be 3/4λ or more and satisfy (2n+1)/4λ (n = 1, 2, 3,...) in order to obtain the diversity effect.

The two antennas are preferably as apart from each other as possible in order to reduce interference between them. For example, for an A4-size notebook type personal computer, n = 5 or n = 6 is desirable. For n = 5, the antenna interval is set to 160 mm, as shown in FIG. 6.

An output from the dual-band antenna 22 is input to a Bluetooth wireless module 63 via the coaxial connector 24 and a coaxial cable 61. An output from the wireless LAN 802.11a dedicated antenna 42 is input to a wireless LAN module 64 via the coaxial connector 44 and a coaxial cable 62.

The wireless LAN module 64 includes the wireless LAN 802.11a transmission system circuit 1 and RF switch 3 shown in FIG. 1. The Bluetooth wireless module 63 includes the wireless LAN 802.11a reception system circuit 2, diversity switch 4, Bluetooth circuit 5, 5-GHz band BPF 6, and 2.4-GHz band BPF 7.

This arrangement can reduce interference between the antennas and the influence of spurious noise, and can fully exhibit the diversity effect of the wireless LAN antenna. The single-side glass epoxy board is set on the back surface of the liquid crystal panel 31, and the antennas project to the front surface of the liquid crystal panel. This structure can attain a good-balance radiation characteristic on both the front and back surfaces without increasing the housing thickness.

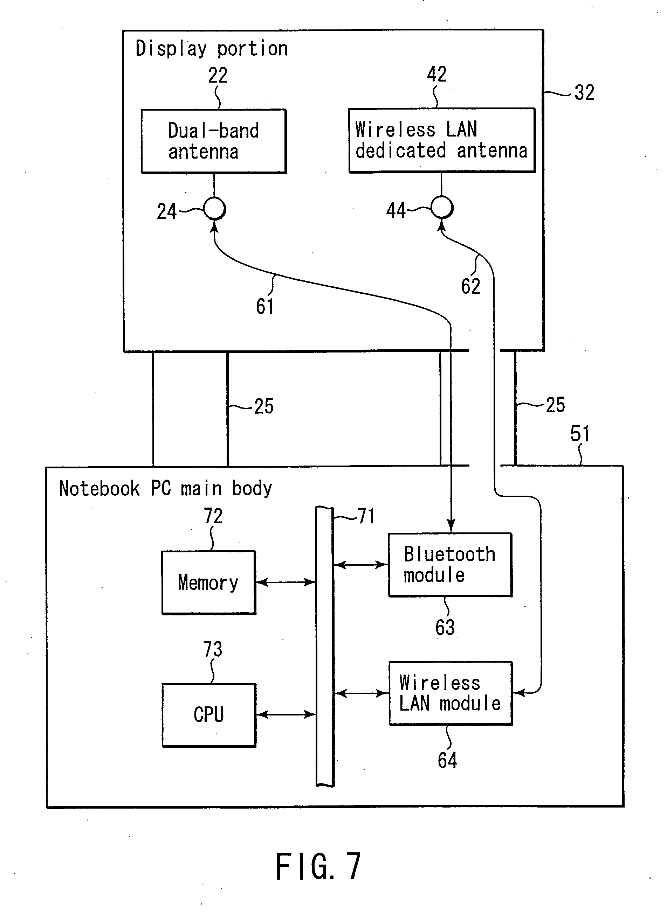

FIG. 7 is a block diagram showing the hardware arrangement of the notebook type personal computer according to the embodiment of the present invention. FIG. 7 shows only the features of this embodiment and does not show a keyboard controller, display controller, and the like which are the essential functions of the notebook type personal computer.

As shown in FIG. 7, the wireless LAN dedicated antenna 42 attached to the back surface of the liquid crystal panel of the display portion 32 is connected to the wireless LAN module 64 via the coaxial cable 62 connected to the coaxial connector 44.

The dual-band antenna 22 attached to the back surface of the liquid crystal panel of the display portion is connected to the Bluetooth module 63 via the coaxial cable 61 connected to the coaxial connector 24.

The Bluetooth wireless module 63 and wireless LAN module 64 are connected to a CPU bus 71. The CPU bus 71 is connected to a CPU 45 for controlling the overall notebook type personal computer, and a memory 72 for storing transmission data to the dual-band antenna 22 and wireless LAN dedicated antenna 42.

The wireless LAN module 64 includes the wireless LAN 802.11a transmission system circuit 1 and RF switch 3 shown in FIG. 1. The Bluetooth wireless module 63 includes the wireless LAN 802.11a reception system circuit 2, diversity switch 4, Bluetooth circuit 5, 5-GHz band BPF 6, 2.4-GHz band BPF 7, and dual-band antenna 9.

The notebook type personal computer of the embodiment enables wireless communication by two wireless communication schemes. Even if one communication scheme uses two diversity antennas, only two antennas meet this demand by using a dual-band antenna. The notebook type personal computer can be made compact, and the cost can be reduced.

The dual-band antenna 9 is shared between the Bluetooth circuit 5 and wireless LAN 802.11a reception system circuit 2. The notebook type personal computer is almost free from the influence of spurious noise or interference with the wireless LAN 802.11a transmission system circuit 1 which uses a higher-power-level signal.

The present invention is not limited to the above-described embodiment, and can be variously modified without departing from the spirit and scope of the invention in practical use.

As has been described above, the present invention can provide an information device in which a dual-band antenna that covers two bands and a diversity antenna are attached to the display portion of the portable information device, stable input impedance matching is achieved in the two bands, interference between the two wireless schemes or the influence of spurious noise is suppressed, and reduction in diversity effect can be prevented.

The present invention can provide an information device capable of communication by a plurality of wireless communication schemes. Also, the present invention can provide an information device with a good radio emission characteristic.

## Claims

1. An information device **characterized by** comprising:
a body;
a diversity antenna (22) which is attached to said body and performs wireless communication in a first frequency band; and
a dual-band antenna (42) which is attached to said body and performs wireless communication in the first frequency band and a second frequency band.

2. A device according to claim 1, **characterized in that**
said diversity antenna includes a wireless LAN antenna, and
said dual-band antenna includes an antenna for a wireless LAN and Bluetooth.

3. A device according to claim 1, **characterized in that**
said body has a display portion comprising a liquid crystal panel and a housing for fixing the liquid crystal panel,
said diversity antenna is attached to a first antenna board,
said dual band antenna is attached to a second antenna board, and
the first and second antenna boards are attached to the housing so as to position said diversity antenna and said dual band antenna above the liquid crystal panel with a predetermined interval.

4. A device according to claim 3, **characterized in that**
the second antenna board has two ground patterns,
one ground pattern has a peripheral length of the two ground pattern has substantially 0.75 to 1.25 wavelengths at the first frequency,
a total peripheral length of the two ground patterns has substantially corresponding to 0.75 to 1.25 wavelengths at the second frequency, and
the two ground patterns are connected via a filter which passes a frequency not more than the first frequency.

5. A device according to claim 1, **characterized in that**
said dual-band antenna is used for reception of wireless communication in the first frequency band and for transmission and reception of wireless communication in the second frequency band, and
said diversity antenna is used for transmission and reception of wireless communication in the first frequency band.

6. An information device **characterized by** comprising:
a diversity antenna which performs wireless communication in a first frequency band;
a dual-band antenna which performs wireless communication in the first frequency band and a second frequency band;
a transmission circuit which outputs a transmission signal transmitted in the first frequency band from said diversity antenna;
a reception circuit which receives a reception signal in the first frequency band that is received by said diversity antenna;
a communication circuit which performs wireless communication in the second frequency band by using said dual-band antenna;
a switch which is connected between said diversity antenna and said transmission and reception circuits, connects said transmission circuit to said diversity antenna when a signal is output from said transmission circuit, and connects said reception circuit to said diversity antenna when a signal is received by said reception circuit;
a first filter which is connected to said dual-band antenna and passes a signal in the first frequency band;
a second filter which is connected between said dual-band antenna and said communication circuit and passes a signal in the second frequency band; and
a diversity switch which compares reception power of a signal that is received by said dual-band antenna and passed through said first filter with reception power of a signal which is received by said diversity antenna and passed through said switch, and outputs a larger-power signal to said reception circuit.

7. A device according to claim 6, **characterized in that**
said transmission and reception circuits perform wireless communication in accordance with a wireless LAN 802.11a standard, and
said communication circuit performs wireless communication in accordance with a Bluetooth standard.

8. An antenna board **characterized by** comprising:
a first ground pattern to obtain a first signal in a first frequency band;
a second ground pattern to obtain a second signal in a frequency band lower than the first frequency band together with the first ground pattern;
a filter which is connected between the first and second ground patterns, and passes the second signal; and
an antenna connected to the first and second ground patterns.

9. A board according to claim 8, **characterized in that**
said antenna board is arranged on a back surface of a liquid crystal panel of a display portion of a portable information device, and
said antenna is arranged above the liquid crystal panel.

10. A board according to claim 8, **characterized in that**
the first and second ground patterns have a total peripheral length corresponding to substantially 0.75 to 1.25 wavelengths of the second signal, and
the first ground pattern has a peripheral length corresponding to substantially 0.75 to 1.25 wavelengths of the first signal.

11. A board according to claim 8, **characterized in that** said filter includes an inductor.

12. A board according to claim 8, **characterized in that** said antenna board includes a single-side glass epoxy. board.
